# EUROPÄISCHE PATENTSCHRIFT

(11) **EP 1 888 937 B1**
(45) Veröffentlichungstag und Bekanntmachung des Hinweises auf die Patenterteilung: **08.10.2008**
(21) Anmeldenummer: 06761980.9
(22) Anmeldetag: 07.06.2006
(51) Int. Cl.: F16F 1/44, F16F 3/087, F16F 1/52, F16F 15/08

(54) **AUSGLEICHSVORRICHTUNG ZUM AUSGLEICH EINES FEHLWINKELS EINER MISCHTROMMEL**
COMPENSATION DEVICE FOR COMPENSATING THE ANGULAR DISCREPANCY OF A MIXING DRUM
DISPOSITIF DE COMPENSATION DESTINE A COMPENSER UNE ERREUR D'ANGLE D'UN TAMBOUR MELANGEUR

(30) Priorität: 10.06.2005 DE 102005027038; 23.03.2006 DE 102006013372
(43) Veröffentlichungstag der Anmeldung: 20.02.2008
(73) Patentinhaber: ZF Friedrichshafen AG, 88038 Friedrichshafen (DE)
(72) Erfinder: HEILIG, Eduard, 88048 Friedrichshafen (DE)
(86) Internationale Anmeldenummer: PCT/EP2006/005421
(87) Internationale Veröffentlichungsnummer: WO 2006/131335

(56) Entgegenhaltungen:
- WO-A-20/06015832
- DE-A1- 2 341 250
- FR-A- 2 146 053
- FR-A- 2 221 029
- GB-A- 543 123
- GB-A- 668 010
- US-A- 5 820 258

## Beschreibung

Die Erfindung betrifft eine Ausgleichsvorrichtung zum Ausgleich eines Fehlwinkels einer Mischtrommel nach der im Oberbegriff von Anspruch 1 näher definierten Art.

Mischtrommeln auf Fahrmischem sind einerseits in einem Antrieb, welcher auf einem Lagerbock befestigt ist, gelagert und andererseits über hintere Trommellager ebenfalls gelagert, so dass sich die Trommel drehen kann, wobei die Trommel einen Neigungswinkel aufweist, wodurch der Antrieb die Trommel in vertikaler und horizontaler Richtung lagern muß. Der Lagerbock, auf welchem der Antrieb befestigt ist, ist mit dem Fahrzeugrahmen des Fahrmischers verbunden, wobei bei Fahrt in unebenem Gelände sich der Fahrzeugrahmen verwinden kann und ein Fehlwinkel zwischen der Trommel und dem Lagerbock, welcher mit dem Fahrzeugrahmen verbunden ist, auftritt. Dieser Fehlwinkel muß über eine Ausgleichsvorrichtung ausgeglichen werden.

Die DE 20 2004 020 370 U1 offenbart eine Ausgleichsvorrichtung zum Ausgleich eines Fehlwinkels einer Mischtrommel, wobei zwischen einem ersten Bauteil und einem zweiten Bauteil ein elastisches Element angeordnet ist, über welches die Gewichtskraft der Mischtrommel in den Lagerbock einleitbar ist. Die Ausgleichsvorrichtung weist zwar zur Abstützung der axialen Kräfte einen zusätzlichen Anschlag auf, wodurch die Gewichtskraft der Trommel sicher übertragen werden kann, die Abstützung des Drehmoments, welche der Antrieb erzeugt, um die Mischtrommel zu drehen, erfolgt jedoch auf einer sehr kleinen Fläche.

Der vorliegenden Erfindung liegt die Aufgabe zugrunde, eine Ausgleichsvorrichtung zum Ausgleich eines Fehlwinkels einer Mischtrommel zu einem Lagerblock zu schaffen, bei welcher die Gewichtskraft der Trommel und das Drehmoment des Antriebs sicher abgestützt werden kann.

Die Aufgabe wird mit einer, auch die kennzeichnenden Merkmale des Hauptanspruchs aufweisenden, gattungsgemäßen Ausgleichsvorrichtung gelöst.

Erfindungsgemäß weist die Ausgleichsvorrichtung ein erstes Bauteil auf, welches einen Dorn aufweist, an dessen Enden sich radial zur Außenfläche des Dorns erstreckende Flächen anschließen, wodurch der Dorn mit den Flächen einen U-förmigen Hohlraum bildet. Ein zweites Bauteil der Ausgleichsvorrichtung weist einen Hohlkörper mit einer Innenfläche und einer Außenfläche auf, wobei zwischen der Innenfläche dieses Hohlkörpers und dem Dorn des ersten Bauteils ein elastisches Element angeordnet ist. Vorzugsweise ist der Dorn als Kegelstumpf ausgebildet und die Innenfläche des Hohlkörpers ist parallel zur Außenfläche des Dorns angeordnet. Dadurch ist es möglich, das elastische Element zwischen dem Hohlkörper und dem Dorn ortsfest zu halten. Der Hohlkörper weist ebenfalls radial zu seiner Außenfläche sich erstreckende Flächen auf, welche einen Steg begrenzen, wobei sich dieser Steg zwischen den Flächen des ersten Bauteils befindet und somit das U-förmige Element unterbricht. Zwischen den Flächen des zweiten Bauteils, somit dem Steg, und den Flächen des ersten Bauteils, somit den Seitenflächen des U-förmigen Elements, befinden sich elastische Elemente, wobei der Abstand der Flächen des ersten Elements und der Flächen des zweiten Elements sowie der Dicke der elastischen Elemente so gewählt ist, dass sich die elastischen Elemente unter Vorspannung befinden. Das radial äußere Ende der Flächen des zweiten Elements, somit das äußere Ende des Stegs, ist verbindbar oder einstückig mit dem Lagerbock des Fahrmischers ausgebildet, das erste Element ist verbindbar oder einstückig mit dem Gehäuse des Trommelantriebs ausgebildet.

Es besteht auch die Möglichkeit, das zweite Element mit dem Lagerbock und das erste Element mit dem Trommelantrieb zu verbinden. Die elastischen Elemente, welche zwischen den Flächen des ersten Elements angeordnet sind und sich unter Vorspannung befinden, sind als quaderförmige Elemente ausgebildet, welche so angeordnet sind, dass deren Längsrichtung der Längsrichtung der Mischtrommel entspricht, wodurch diese Elemente das entstehende Drehmoment zum Drehen der Mischtrommel sicher aufnehmen.

In einer weiteren Ausgestaltungsform befinden sich an der Ober- und Unterseite dieser elastischen Elemente, vorzugsweise rechtwinklig zu der Längsrichtung dieser elastischen Elemente, Erhebungen, welche in Vertiefungen der Flächen des ersten Elements und der Flächen des zweiten Elements eingreifen, wodurch diese elastischen Elemente ortsfest gehalten werden. Das elastische Element zwischen dem Dorn und dem Hohlkörper nimmt somit die horizontalen und axialen Kräfte, welche aus der Gewichtskraft der Mischtrommel resultieren, auf, und die elastischen Elemente zwischen dem Steg und dem U-förmigen Element nehmen die Abstützfunktion des Drehmoments zum Antrieb der Mischtrommel und auch die vertikale Gewichtskraft der Trommel auf. Indem die elastischen Elemente in eingebautem Zustand sich alle unter Vorspannung befinden, können die elastischen Elemente bei der Montage ohne Anvulkanisieren oder Verkleben montiert werden. Durch die Trennung der Drehmomentabstützung und der Abstützung der axialen und horizontal wirkenden Kräfte ist es möglich, das elastische Element zwischen dem Dorn und dem Hohlkörper mit einem kleinen Durchmesser auszuführen, wodurch die Wege innerhalb dieses Elements bei Drehbewegungen verringert werden.

Weitere Merkmale sind der Figuren-Beschreibung zu entnehmen.
Es zeigen:
- Fig. 1: einen Fahrmischer;

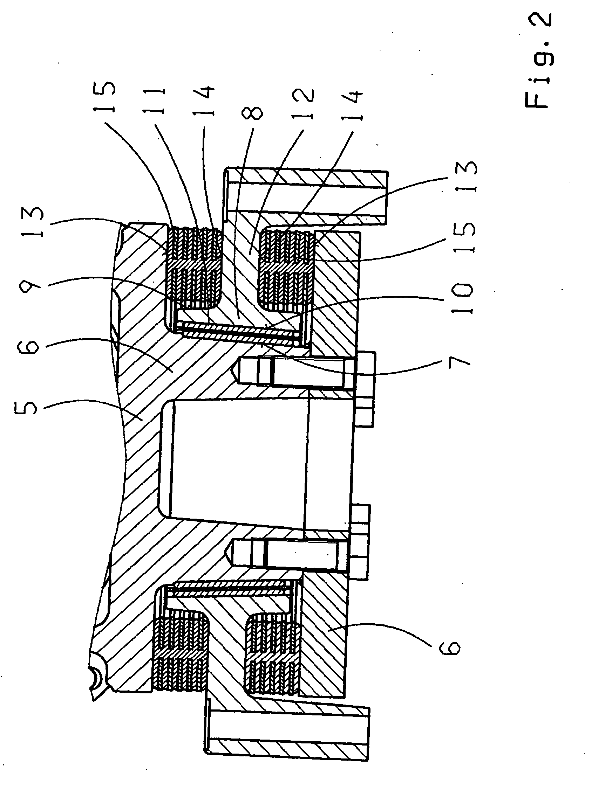

- Fig. 2: die Ausgleichsvorrichtung im Schnitt;

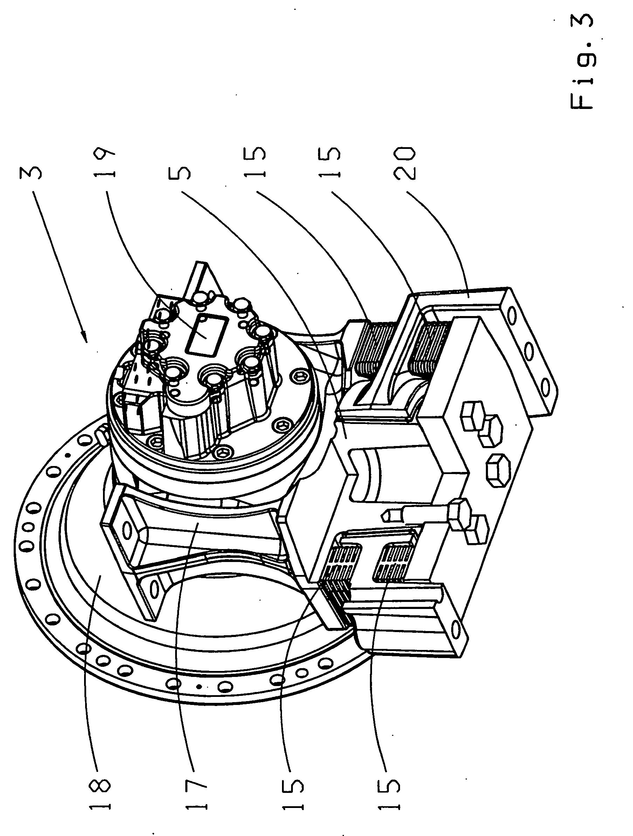

- Fig. 3: eine perspektivische Ansicht des Mischtrommelantriebs mit der Ausgleichsvorrichtung;

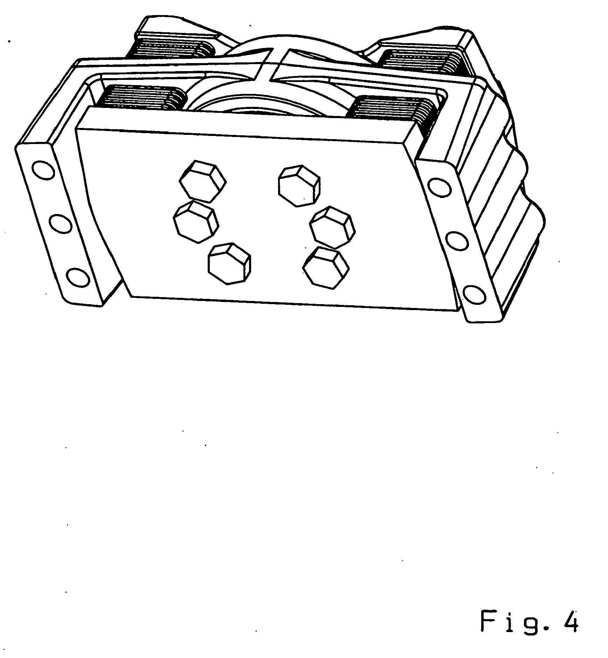

- Fig. 4: eine perspektivische Ansicht der Ausgleichsvorrichtung;

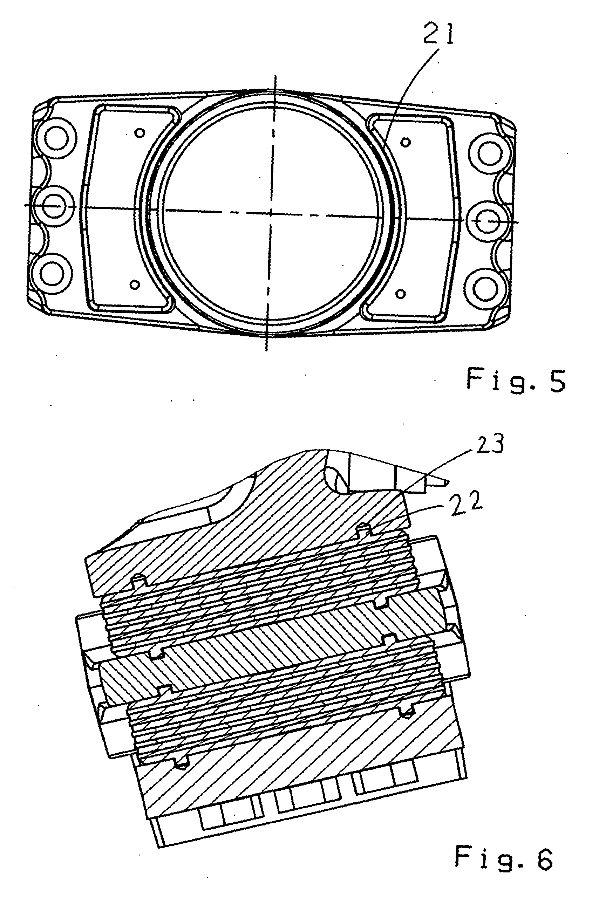

- Fig. 5: einen horizontalen Schnitt durch die Ausgleichsvorrichtung und
- Fig. 6: einen vertikalen Schnitt durch die Ausgleichsvorrichtung.

Fig. 1:
Ein Fahrmischer zum Transport von Beton weist eine Mischtrommel 1 auf, welche über hintere Mischtrommellager 2 und einen Trommelantrieb 3 drehbar gelagert ist. Der Trommelantrieb 3 ist auf einem Lagerbock 4 ortsfest gehalten und mit dem Fahrzeugrahmen des Fahrmischers verbunden. Bei Fahrt in unebenem Gelände verwindet sich der Fahrzeugrahmen und somit bewegt sich der Lagerbock 4 relativ zur Mischtrommel 1. Zwischen dem Trommelantrieb 3 und dem Lagerbock 4 ist eine Ausgleichsvorrichtung zum Ausgleich des Fehlwinkels angeordnet.

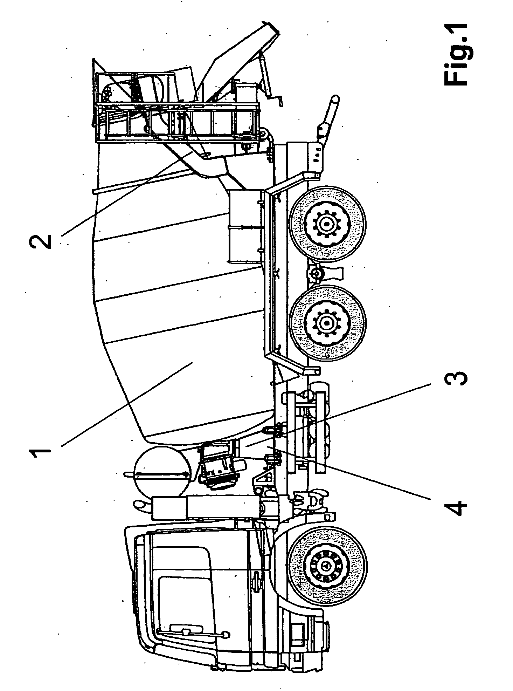

Fig. 2:
Ein erstes Bauteil 5, welches einstückig oder verbindbar mit dem Trommelantrieb 3 der Fig. 1 ausgeführt ist, weist einen Dorn 6 auf, dessen Außenfläche 7 konisch ausgeführt ist, so dass der Dorn 6 die Form eines Kegelstumpfes aufweist. Ein Hohlkörper 8 hat eine Außenfläche 9 und eine Innenfläche 10, wobei sich zwischen der Innenfläche 10 und der Außenfläche 7 ein elastisches Element 11 befindet. Das elastische Element 11 ist beispielsweise aus einem Elastomer mit einer Metalleinlage hergestellt. An den Enden des Dorns 6 erstrecken sich radial zur Außenfläche 7 Flächen 13, wodurch die Flächen 13 und die Außenfläche 7 ein U-förmiges Element bilden. Radial zur Außenfläche 9 erstrecken sich die Flächen 14, welche einen Steg bilden. Am radial äußeren Ende der Flächen 14 ist das zweite Bauteil 12 so ausgebildet, dass es mit dem Lagerbock 4 von Fig. 1 verbunden werden kann. Zwischen den Flächen 14 und den Flächen 13 sind elastische Elemente 15 angeordnet, welche zur Drehmomentabstützung dienen, wobei die oberen Schichtfederpakete auch zur Aufnahme der vertikal wirkenden Gewichtskraft dient. Diese elastischen Elemente 15 sind vorzugsweise als Schichtfedern ausgebildet, wobei die E-lastomerteile von Metallteilen unterbrochen sind. Es besteht auch die Möglichkeit, die elastischen Elemente 15 durch andere elastische Elemente, wie beispielsweise Tellerfedern oder Schraubenfedern, zu ersetzen. Der Abstand der Flächen 13 zu den Flächen 14 ist geringer als die Bauhöhe der elastischen Elemente 15, wodurch die elastischen Elemente 15 sich unter Vorspannung befinden. Die Montage erfolgt, indem nach Einführung des zweiten Bauteils und der elastischen Elemente 11 und 15 eine Platte 16 auf den Dorn 6 geschraubt wird.

Fig. 3:
Das Gehäuse 17 des Trommelantriebs 3 ist einstückig mit dem ersten Bauteil 5 verbunden. Der Trommelantrieb 3 weist einen Abtriebsflansch 18 auf, welcher mit der Mischtrommel verbindbar ist. Vorzugsweise ist der Trommelantrieb 3 mit einem Planetengetriebe ausgeführt, dessen Hohlrad mit dem Gehäuse 17 drehfest verbunden ist und dessen Sonne mit einem hydraulischen Motor 19 verbunden ist. Die elastischen Elemente 15 sind quaderförmig ausgebildet und ihre Längsachse ist in Richtung der Längsachse der Mischtrommel angeordnet. Das Verbindungselement 20 ist mit dem Lagerbock 4 der Fig. 1 verbindbar.

Fig. 4:
Das erste Bauteil 5 wird nach Einlegen der elastischen Elemente 11 und 15 in den Hohlkörper 8 eingeführt und anschließend die Platte 16 auf den Dorn 6 geschraubt. Dadurch werden die elastischen Elemente 15 ortsfest gehalten und unter Vorspannung gebracht.

Fig. 5:
Der Dorn 6 ist vorzugsweise kreisrund ausgeführt und die elastischen Elemente 15 weisen an ihrer Innenfläche 21 ebenfalls eine kreisförmige Ausnehmung auf.

Fig. 6:
Die elastischen Elemente 15 weisen Erhebungen 22 auf, welche in Ausnehmungen 23 eingreifen. Dadurch ist es möglich, dass die elastischen Elemente 15 zusätzlich ortsfest fixiert sind.

### Bezugszeichen

- 1: Mischtrommel
- 2: hintere Mischtrommellager
- 3: Trommelantrieb
- 4: Lagerbock
- 5: erstes Bauteil
- 6: Dorn
- 7: Außenfläche
- 8: Hohlkörper
- 9: Außenfläche
- 10: Innenfläche
- 11: elastisches Element
- 12: zweites Bauteil
- 13: Flächen
- 14: Flächen
- 15: elastische Elemente
- 16: Platte
- 17: Gehäuse
- 18: Abtriebsflansch
- 19: Motor
- 20: Verbindungselement
- 21: Innenfläche
- 22: Erhebungen
- 23: Ausnehmungen

## Patentansprüche

1. Ausgleichsvorrichtung zum Ausgleich eines Fehlwinkels einer Mischtrommel zu einem Lagerbock (4) mit mindestens einem ersten Bauteil (5) und einem zweiten Bauteil (12), von welchem eines dieser Bauteile verbindbar oder einstückig mit dem Lagerbock (4) ausgebildet ist, wobei mindestens ein elastisches Element (11, 15) zum Ausgleich des Fehlwinkels zwischen dem ersten Bauteil (5) und dem zweiten Bauteil (12) angeordnet und über die Ausgleichsvorrichtung die Gewichtskraft der Mischtrommel an den Lagerbock (4) übertragbar ist, **dadurch gekennzeichnet, dass** das erste Bauteil (5) einen Dorn (6) mit einer Außenfläche (7) aufweist, an dessen Enden sich jeweils radial zur Außenfläche (7) erstreckende Flächen (13) anschließen, und das zweite Bauteil (12) einen Hohlkörper (8) mit einer Innenfläche (10) und einer Außenfläche (9) aufweist, wobei die Innenfläche (10) den Dorn (6) zumindest teilweise umschließt und sich radial zur Außenfläche (9) erstreckende Flächen (14) anschließen, wobei zwischen den Flächen (13) des ersten Bauteils (5) und den Flächen (14) des zweiten Bauteils (12) elastische Elemente (15) angeordnet sind, wobei die Flächen (13, 14) so ausgebildet sind, dass die elastischen Elemente (15) sich unter einer Vorspannung befinden.

2. Ausgleichsvorrichtung nach Anspruch 1, **dadurch gekennzeichnen, dass** zwischen der Außenfläche (7) des Dorns (6) und der Innenfläche (10) des Hohlkörpers (8) ein elastisches Element (11) angeordnet ist.

3. Ausgleichsvorrichtung nach Anspruch 1, **dadurch gekennzeichnet, dass** die Flächen (13, 14) des ersten Bauteils (5) und des zweiten Bauteils (12) sich radial zur Drehachse der Mischtrommel (1) erstrecken, damit das zur Drehung entstehende Drehmoment über die Flächen (13, 14) übertragbar ist.

4. Ausgleichsvorrichtung nach Anspruch 1, **dadurch gekennzeichnet, dass** eines der beiden Bauteile (5, 12) mit einem Gehäuse (17) eines Trommelantriebs (3) verbindbar oder einstückig mit diesem ausgebildet ist und das andere der beiden Bauteile (5, 12) mit dem Lagerbock (4) verbindbar oder einstückig mit diesem ausgebildet ist.

5. Ausgleichsvorrichtung nach Anspruch 1, **dadurch gekennzeichnet, dass** die elastischen Elemente (15) aus Schichtfederpaketen bestehen, bei welchen sich Stahlelemente mit Elastomerteilen abwechseln.

6. Ausgleichsvorrichtung nach Anspruch 1, **dadurch gekennzeichnet, dass** die Außenfläche (7) des Dorns (6) und die Innenfläche (10) des Hohlkörpers (8) konisch ausgeführt sind.

7. Ausgleichsvorrichtung nach Anspruch 1, **dadurch gekennzeichnet, dass** die Flächen (13) des ersten Bauteils (5) über Verbindungselemente mit dem Dorn (6) verbunden sind.

8. Ausgleichsvorrichtung nach Anspruch 1, **dadurch gekennzeichnet, dass** Flächen (13) des ersten Bauteils (5) einstückig mit dem Dorn (6) ausgeführt sind.

9. Ausgleichsvorrichtung nach Anspruch 1, **dadurch gekennzeichnet, dass** die Flächen (14) des zweiten Bauteils (12) an ihren, dem Hohlkörper (8) abgewandten Ende so ausgebildet sind, dass sie mit dem Lagerbock (4) verbindbar sind.

10. Mischergetriebeanordnung mit einer Ausgleichsvorrichtung nach Anspruch 1, **dadurch gekennzeichnet, dass** das Gehäuse (17) der Mischergetriebeanordnung einstückig mit dem ersten Bauteil (5) verbunden ist, und im Gehäuse (17) mindestens eine Planetenstufe und eine Wälzlagerung zur Übertragung der Kräfte der Mischtrommel an das Gehäuse (17) angeordnet sind; wobei ein Hohlrad der Planetenstufe den Abtrieb bildet.

## Claims

1. Equalizer for equalization of an angle error between a mixing drum and a bearing bracket (4), with at least a first component (5) and a second component (12), with one of these components being linkable with or forming a single piece with the bearing bracket (4), with at least one elastic element (11, 15) being arranged between the first component (5) and the second component (12) for equalization of the error angle, and with the weight force of the mixing drum being transferrable to the bearing bracket (4) via the equalizer, **characterized in that** the first component (5) features an arbor (6) with an exterior surface (7), with connecting surfaces (13) extending radially towards the exterior surface (7) on its ends, and that the second component (12) features a hollow body (8) with an interior surface (10) and an exterior surface (9), with the interior surface (10) at least partially embracing the arbor (6), and with connecting surfaces (14) extending radially towards the exterior surface (9), with elastic elements (15) being arranged between the surfaces (13) of the first component (5) and the surfaces (14) of the second component (12), with the surfaces (13, 14) being designed in such a manner that the elastic elements (15) are subject to initial tension.

2. Equalizer according to claim 1, **characterized in that** an elastic element (11) is arranged between the exterior surface (7) of the arbor (6) and the interior surface (10) of the hollow body (8).

3. Equalizer according to claim 1, **characterized in that** the surfaces (13, 14) of the first component (5) and the second component (12) extend radially to the axis of rotation of the mixing drum (1), so that the torque is transmittable via the surfaces (13, 14).

4. Equalizer according to claim 1, **characterized in that** one of the two components (5, 12) is linkable with a housing (17) of a drum drive (3) or forms a single piece with it, and that the other one of the two components (5, 12) is linkable with the bearing bracket (4) or forms a single piece with it.

5. Equalizer according to claim 1, **characterized in that** the elastic elements (15) are composed of multilayer spring packs with alternating steel and elastomer parts.

6. Equalizer according to claim 1, **characterized in that** the exterior surface (7) of the arbor (6) and the interior surface (10) of the hollow body (8) are conical.

7. Equalizer according to claim 1, **characterized in that** the surfaces (13) of the first component (5) are linked with the arbor (6) via connecting elements.

8. Equalizer according to claim 1, **characterized in that** surfaces (13) of the first component (5) form a single piece with the arbor (6).

9. Equalizer according to claim 1, **characterized in that** the surfaces (14) of the second component (12) are designed on the ends not facing the hollow body (8) in such a manner that they can be linked with the bearing bracket (4).

10. Mixer transmission arrangement with an equalizer according to claim 1, **characterized in that** the housing (17) of the mixer transmission arrangement forms a single piece with the first component (5) and that at least a planetary stage and a rolling bearing are arranged in the housing (17) for transmission of the forces of the mixing drum to the housing (17), with an internal ring gear of the planetary stage constituting the output.

## Revendications

1. Dispositif de compensation pour la compensation d'une erreur d'angle d'un tambour mélangeur par rapport à un support de palier (4) présentant au moins un premier composant (5) et un deuxième composant (12), dont un de ces composants et réalisé de façon à pouvoir être connecté avec le support de palier (4) ou en une seule pièce avec le support de palier (4), sachant que au moins un élément élastique (11, 15) est disposé entre le premier composant (5) et le deuxième composant (12) pour la compensation de l'erreur d'angle et qu'il est possible de transférer la force de pesanteur du tambour mélangeur par l'intermédiaire du dispositif de compensation au support de palier (4), **caractérisé en ce que** le premier composant (5) comporte un goujon (6) avec une surface extérieure (7), aux extrémités duquel sont jointes des surfaces (13) s'étendant respectivement radialement par rapport à la surface extérieure (7), et **en ce que** le deuxième composant (12) comporte un corps creux (8) avec une surface intérieure (10) et une surface extérieure (9), sachant que la surface intérieure (10) enferme au moins partiellement le goujon (6) et **en ce que** sont jointes des surfaces (14) s'étendant radialement par rapport à la surface extérieure (9), sachant que entre les surfaces (13) du premier composant (5) et les surfaces (14) du deuxième composant (12) sont disposés des éléments élastiques (15), sachant que les surfaces (13, 14) sont réalisées de façon à ce que les éléments élastiques (15) sont sous précontrainte.

2. Dispositif de compensation selon la revendication 1, **caractérisé en ce que** entre la surface extérieure (7) du goujon (6) et la surface intérieure (10) du corps creux (8) est disposé un élément élastique (11).

3. Dispositif de compensation selon la revendication 1, **caractérisé en ce que** les surfaces (13, 14) du premier composant (5) et du deuxième composant (12) s'étendent radialement par rapport à l'axe de rotation du tambour mélangeur (1), afin que le couple généré et nécessaire pour la rotation du tambour puisse être transmis à travers les surfaces (13, 14).

4. Dispositif de compensation selon la revendication 1, **caractérisé en ce que** un des deux composants (5, 12) peut être raccordé avec un carter (17) d'un entraînement de tambour (3) ou **en ce qu'**il est réalisé en une seule pièce avec ce carter, et **en ce que** l'autre des deux composants (5, 12) peut être raccordé au support de palier (4) ou **en ce qu'**il est réalisé en une seule pièce avec le support de palier.

5. Dispositif de compensation selon la revendication 1, **caractérisé en ce que** les éléments élastiques (15) sont composés d'ensembles blocs-ressorts, dans lesquels sont montés en alternance des éléments en acier et des pièces en élastomères.

6. Dispositif de compensation selon la revendication 1, **caractérisé en ce que** la surface extérieure (7) du goujon (6) et la surface intérieure (10) du corps creux (8) sont formées de façon conique.

7. Dispositif de compensation selon la revendication 1, **caractérisé en ce que** les surfaces (13) du premier composant (5) sont liées par l'intermédiaire d'éléments de liaison au goujon (6).

8. Dispositif de compensation selon la revendication 1, **caractérisé en ce que** les surfaces (13) du premier composant (5) sont réalisées en une seule pièce avec le goujon (6).

9. Dispositif de compensation selon la revendication 1, **caractérisé en ce que** les surfaces (14) du deuxième composant (12) sont formées, du côté de leurs extrémités opposées au corps creux (8), de façon à ce qu'elles peuvent être raccordées au support de palier (4).

10. Arrangement d'une transmission de mélangeur avec un dispositif de compensation selon la revendication 1, **caractérisé en ce que** le carter (17) de l'arrangement de transmission de mélangeur est raccordé en une seule pièce avec le premier composant (5), et **en ce que** dans le carter (17) sont disposés au moins un train épicycloïdal et un palier à roulement pour la transmission des forces du tambour mélangeur au carter (17), sachant qu'une couronne du train épicycloïdal forme la sortie.
